## Europäisches Patentamt

## European Patent Office

## Office européen des brevets

(11) Veröffentlichungsnummer: **0 204 686**

**B1**

(12) **EUROPÄISCHE PATENTSCHRIFT**

(45) Veröffentlichungstag der Patentschrift:
04.01.89

(21) Anmeldenummer: 86890126.5

(22) Anmeldetag: 06.05.86

(51) Int. Cl.⁴: **B 65 D 90/66**, B 65 F 1/12, B 66 F 9/19, B 66 F 9/12

(54) **Sammeleinrichtung insbesondere für Altmaterial, wie Altglas od.dgl.**

(30) Priorität: 06.05.85 AT 1372/85

(43) Veröffentlichungstag der Anmeldung:
10.12.86 Patentblatt 86/50

(45) Bekanntmachung des Hinweises auf die Patenterteilung:
04.01.89 Patentblatt 89/1

(84) Benannte Vertragsstaaten:
BE CH DE FR GB IT LI LU NL SE

(56) Entgegenhaltungen:
EP-A-0 045 930
CH-A-394 509
FR-A-2 068 178
GB-A-969 124
GB-A-988 544
US-A-2 441 750
US-A-2 725 999
US-A-3 006 491
US-A-4 423 831

(73) Patentinhaber: **Transporte Waizinger Gesellschaft m.b.H. & Co. KG, Ennser Strasse 119, A-4407 Dietach bei Steyr (AT)**

(72) Erfinder: **Waizinger, Gottfried, Ennser Strasse 119, A-4407 Steyr- Dietach (AT)**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

## Beschreibung

Die Erfindung bezieht sich auf eine Sammeleinrichtung insbesondere für Altmaterial, wie Altglas od. dgl., bestehend aus Sammelbehältern zum Einfüllen des Materials und einem Gabelstapler zum Heben und Entleeren der einen mittig geteilten Klappboden aufweisenden Behälter, wobei der Hubschlitten des Gabelstaplers einen mit einem gegensinnig betätigbaren Drehgabelpaar ausgerüsteten Zusatzrahmen aufnimmt und die beiden Teile des Behälter-Klappbodens in Klappachsenrichtung offene, jeweils einer Drehgabel des Drehgabelpaares zugeordnete Aufnahmeschuhe tragen, welche Aufnahmeschuhe in Lage und Abstand bezüglich der Klappboden-Klappachsen an Lage und Abstand der Drehgabeln bezüglich der Drehgabel-Drehachsen angepaßt sind.

Wie aus der GB-A-969 124 hervorgeht, gibt es zum Hantieren von Behältern mit zweigeteiltem Klappboden bereits Gabelstapler, die gegensinnig verschwenkbare Drehgabeln bzw. Gabelzinken aufweisen und mit diesen Drehgabeln oder Zinken nicht nur das Heben, sondern auch das Öffnen und Schließen der Behälter erlauben, wobei mittels der in die Aufnahmeschuhe des Klappbodens einfahrbaren Drehgabeln die Behälter problemlos hochgehoben und abgestellt werden können, ohne daß ein händisches Ein- und Aushängen von Haken od. dgl. Lastaufnahmeelementen notwendig wäre und, die Drehgabeln durch das Verschwenken die Teile des Klappbodens mitnehmen und den Klappboden gewissermaßen zwangsgesteuert betätigen. Allerdings sind bisher die Drehgabeln bzw. die drehbaren Gabelzinken nur über die als Drehachsen dienenden Lagerzapfen am Zusatzrahmen abgestützt und werden mittels einer eigenen Lenkereinrichtung und eines an den Lenkern angreifenden Hydrauliktriebes betätigt, so daß sich recht ungünstige Kraft- und Belastungsverhältnisse ergeben und für eine ordnungsgemäße Funktion ein beträchtlicher Bauaufwand erforderlich ist.

Der Erfindung liegt daher die Aufgabe zugrunde, diese Mängel zu beseitigen und eine Sammeleinrichtung der eingangs geschilderten Art zu schaffen, die sich durch eine vergleichsweise einfache und doch robuste Konstruktion ihres Gabelstaplers auszeichnet und so eine besonders rationelle Altmaterialsammlung gewährleistet.

Die Erfindung löst diese Aufgabe dadurch, daß der Zusatzrahmen des Hubschlittens zur Halterung des Drehgabelpaares zwei spiegelbildlich nebeneinander angeordnete Winkelhebel aufweist, welche im Scheitelbereich drehbar gelagerten Winkelhebel mit den einen Armen das Drehgabelpaar aufnehmen und mit den anderen Armen in eine Gleitführung eingreifen. Diese Winkelhebel bringen günstige Kräfteverhältnisse sowohl für die Drehgabelbetätigung als auch für die Lastaufnahme mit sich, da sie durch die in den Gleitführungen sitzenden Arme eine zweckmäßige, die Drehlager entlastende Abstützung für die Lastaufnahmemomente sicherstellen und außerdem für die Drehgabelbetätigung die Möglichkeit einer Hebelübersetzung bieten.

Sind dabei die in den Gleitführungen zwischen Endanschlägen geführten Arme der Winkelhebel über einen Hydrauliktrieb miteinander verbunden, läßt sich die Betätigung des Drehgabelpaares ohne zusätzliche Lenker od. dgl. durch einen einfachen doppeltwirkenden Hydraulikzylinder verwirklichen, der die Winkelhebel jeweils bis zu den Endanschlägen zusammenzieht oder auseinanderdrückt und dadurch die an den anderen Armen sitzenden Drehgabeln wunschgemäß verdreht.

In der Zeichnung ist der Erfindungsgegenstand in einem Ausführungsbeispiel rein schematisch dargestellt, und zwar zeigen

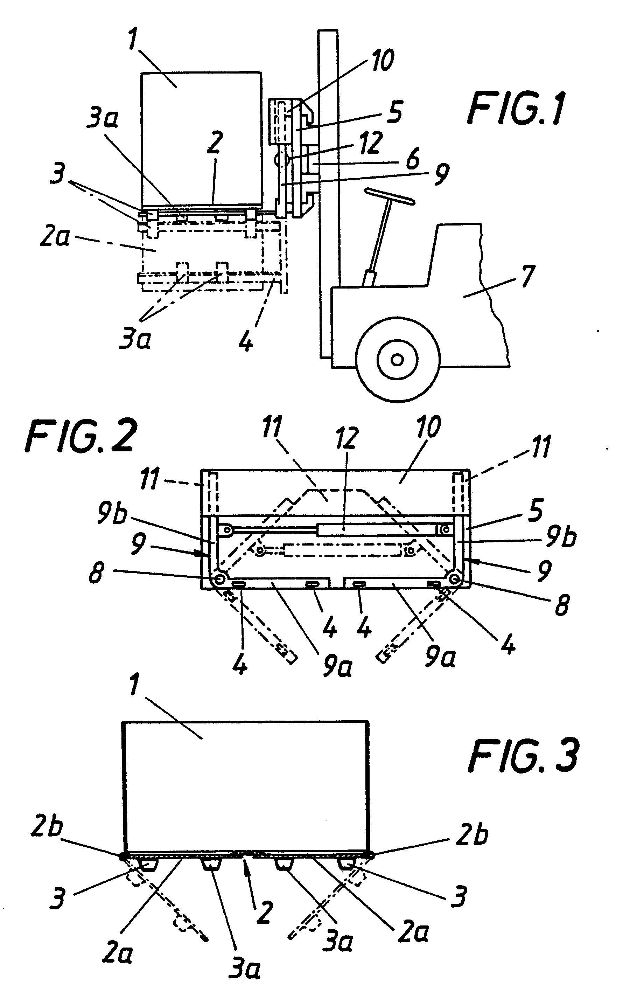

Fig. 1     Behälter und Hebezeug einer erfindungsgemäßen Sammeleinrichtung in Seitenansicht,

Fig. 2     den Zusatzrahmen dieses Hebezeuges in Vorderansicht und

Fig. 3     einen zugehörigen Behälter im Längsschnitt.

Zum Einsammeln von wertvollem Altmaterial, wie Altglas od. dgl., für eine Rohstoffwiedergewinnung aber auch von Abfällen od. dgl. zur gemeinsamen Entsorgung werden, auf verschiedenen Plätzen verteilt, Sammelbehälter aufgestellt, in die das gewünschte Material einzuwerfen ist, das dann mit geeigneten Lastwagen, beispielsweise Containerfahrzeugen, gesammelt abtransportiert wird. Um nun das Hantieren dieser Behälter und ihr Entleeren aufwandsarm und geschickt durchführen zu können, sind Sammelbehälter 1 vorgesehen, die bei etwa rechteckigem Grundriß einen mittig geteilten Klappboden 2 aufweisen. Die beiden Teile 2a des Klappbodens 2 tragen Kufen 3, von denen die inneren 3a zur gleichmäßigeren Abstützung der Bodenklappen 2a gegenüber den äußeren 3 einwärts versetzt sein können. Die Kufen 3, 3a jedes Klappbodenteiles 2a bilden nun Aufnahmeschuhe für eine Lastaufnahmegabel, so daß zum Hantieren dieser Sammelbehälter 1 auch ein Paar von Drehgabeln 4 dient, das an einem Zusatzrahmen 5 für den Hubschlitten 6 eines Gabelstaplers 7 gelagert ist. Dadurch ist es möglich, den Gabelstapler 7 bedarfsweise zur Hantierung der Behälter mit dem erforderlichen Drehgabelpaar auszurüsten, so daß die Behälter 1 allein vom Gabelstapler 7 aus hochgehoben, zum Umladeplatz gefördert, entleert und wieder zurück zum Abstellplatz gebracht werden können. Zur Halterung der Drehgabeln 4 am Zusatzrahmen 5 sind zwei spiegelbildlich nebeneinander angeordnete, über ein Drehlager 8 in ihrem Scheitelbereich schwenkbare Winkelhebel 9 vorgesehen, deren einander zugekehrte Arme 9a die Drehgabeln 4 tragen und deren hochragende Arme 9b in eine Gleitführung 10 des Zusatzrahmens 5 eingreifen. Endanschläge 11 innerhalb der Gleitführung 10 begrenzen die Schwenkbewegung der Winkelhebel 9, die durch einen an den Argen 9b angelenkten doppeltwirkenden Hydrauliktrieb 12 betätigt werden können. Lage und Abstand der Drehgabeln 4 bezüglich der zugehörigen Drehlager 8 entsprechen Lage und Abstand der Kufen 3, 3a bezüglich der Scharniere 2b bei den Sammelbehältern 1, so daß nicht nur die Drehgabeln 4 in die Kufen 3, 3a eingeführt werden können, sondern sich auch der Klappboden 2 bei einem Verschwenken der Drehgabeln durch Betätigung der Winkelhebel 9 mitbewegen und daher öffnen und schließen läßt, was in der Zeichnung durch die strichpunktiert dargestellten Offenstellungen veranschaulicht ist. Auf Grund des Zusammenspiels von drehgabelpaarbestücktem Gabelstapler einerseits und Klappböden mit dem Drehgabelpaar zugeordneten Aufnahmeschuhen anderseits ergibt sich daher eine rationelle Möglichkeit der Behälterhantierung, die bei Einsatz aufwandsarmer Vorrichtungen und Geräte eine vergleichsweise bequeme Materialsammlung ohne die Notwendigkeit eines händischen Zugreifens mit sich bringt.

## Patentansprüche

1. Sammeleinrichtung insbesondere für Altmaterial, wie Altglas od. dgl., bestehend aus Sammelbehältern (1) zum Einfüllen des Materials und einem Gabelstapler (7) zum Heben und Entleeren der einen mittig geteilten Klappboden (2) aufweisenden Behälter (1), wobei der Hubschlitten (6) des Gabelstaplers (7) einen mit einem gegensinnig betätigbaren Drehgabelpaar (4, 4) ausgerüsteten Zusatzrahmen (5) aufnimmt und die beiden Teile (2a) des Behälter-Klappbodens (2) in Klappachsenrichtung offene, jeweils einer Drehgabel (4) des Drehgabelpaares zugeordnete Aufnahmeschuhe (3, 3a) tragen, welche Aufnahmeschuhe (3, 3a) in Lage und Abstand bezüglich der Klappboden-Klappachsen (2b) an Lage und Abstand der Drehgabeln (4) bezüglich der Drehgabel-Drehachsen (8) angepaßt sind, dadurch gekennzeichnet, daß der Zusatzrahmen (5) des Hubschlittens (6) zur Halterung des Drehgabelpaares (4, 4) zwei spiegelbildlich nebeneinander angeordnete Winkelhebel (9) aufweist, welche im Scheitelbereich drehbar gelagerten Winkelhebel (9) mit den einen Armen (9a) das Drehgabelpaar (4, 4) aufnehmen und mit den anderen Armen (9b) in eine Gleitführung (10) eingreifen.

2. Sammeleinrichtung nach Anspruch 1, dadurch gekennzeichnet, daß die in den Gleitführungen (10) zwischen Endanschlägen (11) geführten Arme (9b) der Winkelhebel (9) über einen Hydrauliktrieb (12) miteinander verbunden sind.

## Claims

1. An apparatus for collecting particularly waste material, such as waste glass or the like, consisting of collecting containers (1) for receiving the material and a fork lift truck (7) for lifting and emptying the containers (1), which comprise a centrally split hinged bottom (2), wherein the lifting carriage (6) of the fork lift truck (7) includes an additional frame (5), which is provided with a pair of turning forks (4, 4), which are operable in mutually opposite senses, and the two parts (2a) of the hinged bottom (2) carry receiving shoes (3, 3a), which are open in the direction of the hinge axes and are associated with respective turning forks (4) of the pair of turning forks and which in their position and distance relative to the hinge axes (2b) of the hinged bottom are adapted to the position and distance of the turning forks (4) relative to the axes of rotation (8) of the turning forks, characterized in that the additional frame (5) of the lifting carriage (6) comprises two bell-crank levers (9), which are pivoted at their knees and arranged one beside the other as mirror images of each other and serve to mount the pair of turning forks (4, 4) and with their one arms (9a) carry the pair of turning forks (4, 4) and with their other arms (9b) extend into a slide track (10).

2. A collecting apparatus according to claim 1, characterized in that those arms (9b) of the bell-crank levers (9) which are guided in slide tracks (10) between end stops (11) are interconnected by a hydraulic actuator (12).

## Revendications

1. Dispositif de collecte notamment pour des déchets comme le verre ou autre, consistant en réservoirs de collecte (1) pour recevoir les déchets et un chariot élévateur à fourches (7) pour lever et vider le réservoir présentant un fond basculant (2) séparé au milieu, le chariot élévateur (6) du chariot élévateur à fourche (7) recevant un cadre supplémentaire (5) équipé d'une paire de fourches rotatives (4, 4) pouvant être actionnées en sens contraire et les deux parties (2a) du fond basculant du réservoir (2) portant des patins de réception (3, 3a) ouverts en direction de l'axe de basculement et associés chacun à une des fourches pivotantes (4) de la paire de fourches pivotantes, patins de réception (3, 3a) qui sont adaptés quant à leur position et distance par rapport à l'axe de basculement du fond basculant (2b) à la position et à la distance des fourches pivotantes (4) par rapport aux axes de pivotement (8) des fourches de pivotement, caractérisé en ce que le cadre supplémentaire (5) du chariot élevateur (6) présent pour la fixation de la paire de fourches pivotantes (4, 4) deux leviers coudés (9) disposés l'un à côté de l'autre et symétriquement, lesdits leviers coudés (9) logés de manière rotative dans la zone de la crête recevant avec les premiers bras (9a) la paire de fourches rotatives (4, 4) et s'engagent avec les autres bras (9b) dans un guidage coulissant (10).

2. Dispositif de collecte selon la revendication 1, caractérisé en ce que les bras (9b) des leviers coudés (9) guidés dans les guidages (10) entre les butées (11) sont reliés entre eux par un entraînement hydraulique (12).

1

*FIG.1*

*FIG.2*

*FIG.3*